# EUROPEAN PATENT APPLICATION

(11) **EP 2 267 865 A2**
(43) Date of publication of application: **29.12.2010**
(21) Application number: 10006475.7
(22) Date of filing: 22.06.2010
(51) Int. Cl.: H02J 7/02

(54) **Chargeable electric device**

(30) Priority: 25.06.2009 JP 2009150996
(71) Applicant: Panasonic Electric Works Co., Ltd., Kadoma-shi Osaka 571-8686 (JP)
(72) Inventor: Takahashi, Atsushi, Kadoma-shi Osaka 571-8686 (JP); Yamashita, Mikihiro, Kadoma-shi Osaka 571-8686 (JP); Asakawa, Koji, Kadoma-shi Osaka 571-8686 (JP); Katsura, Yoshinori, Kadoma-shi Osaka 571-8686 (JP)
(74) Representative: Schatt, Markus F.

(57) **Abstract**

A chargeable electric device (12) includes a rechargeable battery (35). A secondary coil (31) is arranged to be coupled by electromagnetic induction to a primary coil (26) of a non-contact charger (11) when charging the rechargeable battery (35). A resonance capacitor (32) is connected to the secondary coil (31). A rectification unit (33) is connected to the secondary coil (31). A charging current control unit (34) arranged between the rectification unit (33) and the rechargeable battery (35) controls charging current supplied from the rectification unit (33) to the rechargeable battery (35). A resonance obstruction element (36) obstructs normal resonance produced by the secondary coil (31) and the resonance capacitor (32) in synchronism with the control performed by the charging current control unit (34) to suppress the charging current.

## Description

### CHARGEABLE ELECTRIC DEVICE

This application is based upon and claims the benefit of priority from prior Japanese Patent Application No. 2009-150996, filed on June 25, 2009, the entire contents of which are incorporated herein by reference.

The present invention relates to a chargeable electric device such as an electric toothbrush handle portion of a chargeable electric toothbrush.

An electric toothbrush, which serves as a chargeable electric system, includes a non-contact charger and an electric toothbrush handle portion. The electric toothbrush handle portion, which serves as a chargeable electric device, is charged by the non-contact charger. Such a chargeable electric device includes a secondary coil and a rechargeable battery. The secondary coil is coupled by electromagnetic induction to a primary coil of the non-contact charger, and the rechargeable battery stores power from the secondary coil (for example, refer to Japanese Laid-Open Patent Publication No. 9-298847).

The secondary coil is connected to a rectification unit, such as a rectification diode. The rectification unit is connected to the rechargeable battery via a charging current control unit, which controls the charging current. The rechargeable battery of the chargeable electric device may be one that should not be over-charged, such as a lithium ion battery. In such a chargeable electric device, the charging current control unit suppresses the charging current and prevents over current when the rechargeable battery requires only a small amount of charging current or no longer requires charging current. Further, in such a chargeable electric device, a resonance capacitor is normally connected to the secondary coil to increase efficiency.

However, in such a chargeable electric device, when supplying the rechargeable battery with power, the charging current control unit only regulates the power received by the secondary coil and supplies the regulated power to the rechargeable battery. Thus, when the rechargeable battery requires only a small amount of charging current or does not require charging current at all, the unused power from the non-contact charger is wasted. Further, such power may also heat the secondary coil.

The present invention provides a chargeable electric device that suppresses the heating of a secondary coil and prevents power from being wasted when the charging current supplied to the rechargeable battery is decreased.

One aspect of the present invention is a chargeable electric device including a rechargeable battery. A secondary coil is arranged to be coupled by electromagnetic induction to a primary coil of a non-contact charger when charging the rechargeable battery. A resonance capacitor is connected to the secondary coil. A rectification unit is connected to the secondary coil. A charging current control unit is arranged between the rectification unit and the rechargeable battery to control charging current supplied from the rectification unit to the rechargeable battery. A resonance obstruction element obstructs normal resonance produced by the secondary coil and the resonance capacitor in synchronism with the control performed by the charging current control unit to suppress the charging current

Other aspects and advantages of the present invention will become apparent from the following description, taken in conjunction with the accompanying drawings, illustrating by way of example the principles of the invention.

The invention, together with objects and advantages thereof, may best be understood by reference to the following description of the presently preferred embodiments together with the accompanying drawings in which:
Fig. 1 is a circuit diagram of an electric toothbrush according to one embodiment of the present invention;
Fig. 2 is a timing chart showing the characteristics of the electric toothbrush handle portion shown in Fig. 1;
Fig. 3 is a circuit diagram of a first modification of the electric toothbrush;
Fig. 4 is a timing chart showing the characteristics of the electric toothbrush handle portion shown in Fig. 3;
Fig. 5 is a circuit diagram of a second modification of the electric toothbrush;
Fig. 6 is a circuit diagram of a third modification of the electric toothbrush; and
Fig. 7 is a timing chart showing the characteristics of the electric toothbrush handle portion shown in Fig. 6.

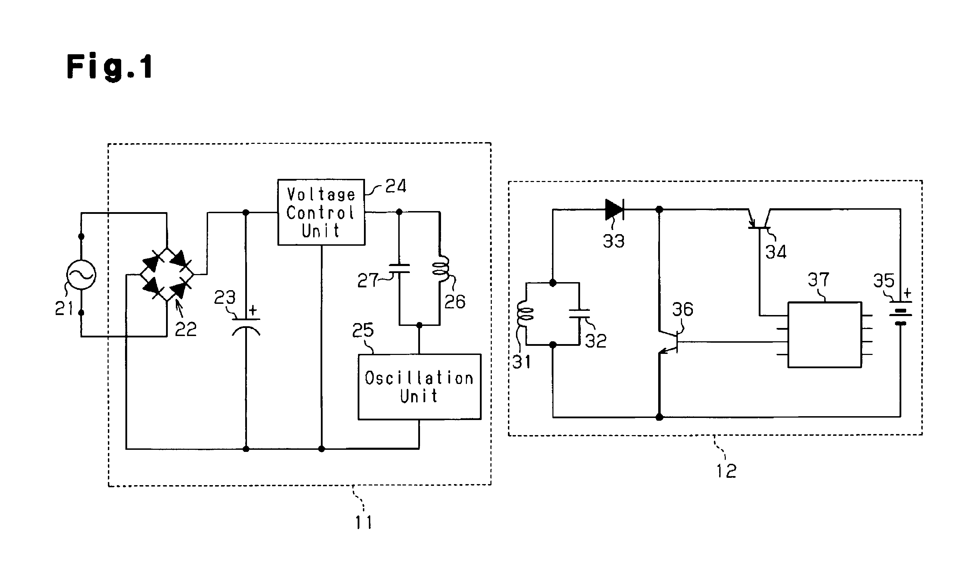

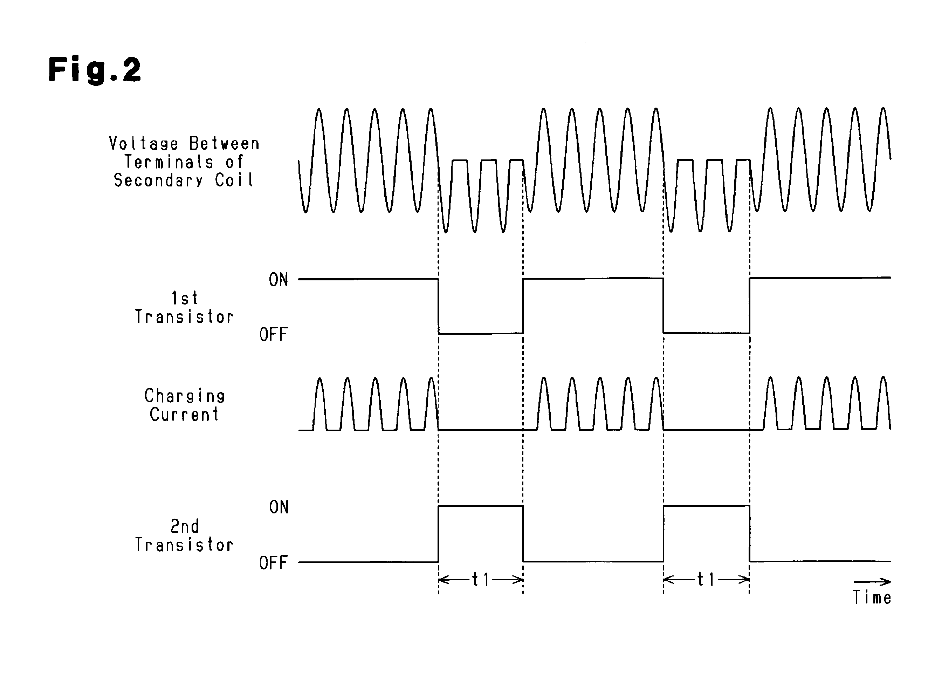

A chargeable electric device according to one embodiment of the present invention will now be discussed with reference to Fig. 1 and 2.

As shown in Fig. 1, an electric toothbrush, which serves as a chargeable electric system, includes a non-contact charger 11 and an electric toothbrush handle portion 12, which serves as the chargeable electrical device.

The non-contact charger 11 includes a bridge rectification circuit 22, a smoothing capacitor 23, a voltage control unit 24, an oscillation unit 25, a primary coil (a first induction coil) 26, and a resonance capacitor 27. The bridge rectification circuit 22 is formed by four diodes and connected to an external AC power supply 21. The smoothing capacitor 23 smoothes the output of the bridge rectification circuit 22. The voltage control unit 24 controls the DC output voltage at a predetermined constant voltage value (e.g., 100 V) irrelevant of the value of the voltage from the bridge rectification circuit 22 (voltage value of the external AC power supply 21). The oscillation unit 25 converts the output voltage from the voltage control unit 24 to a high-frequency voltage having a predetermined frequency (e.g., 50 kHz). The primary coil 26 generates magnetic field lines with the high-frequency voltage. The resonance capacitor 27 is connected in parallel to the primary coil 26.

The electric toothbrush handle portion 12 includes a secondary coil (a second induction coil) 31, a resonance capacitor 32, a diode 33, a first bipolar transistor (hereafter referred to as the first transistor 34), and a rechargeable battery 35. The secondary coil 31 is arranged to be coupled by electromagnetic induction to the primary coil 26 when charging the rechargeable battery 35. The resonance capacitor 32 includes two terminals connected to two terminals of the secondary coil 31. The diode 33 is connected to one terminal of the secondary coil 31 and serves as a rectification unit. The first transistor 34 is connected to the diode 33 and serves as a charging current control unit that controls the charging current. The rechargeable battery 35 is connected to the first transistor 34. In the illustrated example, the rechargeable battery 35 has a positive electrode connected to the first transistor 34 and a negative electrode connected to the other terminal of the secondary coil 31.

The electric toothbrush handle portion 12 includes a resonance obstruction element, which obstructs normal resonance produced by the secondary coil 31 and the resonance capacitor 32 in synchronism with the control performed by the first transistor 34 to suppress the charging current. The resonance obstruction element includes, for example, a switching element. In the illustrated non-restrictive example, a second bipolar transistor (hereafter referred to as the second transistor 36) serves as the resonance obstruction element and the switching element.

More specifically, the second transistor 36, which is an NPN type bipolar transistor, includes a collector, which is connected to a first node between the diode 33 and the first transistor 34, namely, the cathode of the diode 33. The second transistor 36 further includes an emitter connected to a second node between the other terminal of the secondary coil 31 and the negative electrode side of the rechargeable battery 35.

The electric toothbrush handle portion 12 includes a controller 37 connected to the base of each of the first transistor 34 and the second transistor 36. The controller 37 is connected to the rechargeable battery 35 directly or via a non-illustrated circuit and monitors the condition (state of charge) of the rechargeable battery 35. The controller 37 deactivates the first transistor 34 to suppress the charging current and prevent overcurrent when determining that the rechargeable battery 35 does not need to be supplied with charging current or when determining that the charging current may be decreased to a small amount. The controller 37 activates the second transistor 36 in synchronism with the control for deactivating the first transistor 34, short-circuits the two terminals of the secondary coil 31 (via the diode 33, that is, in a subsequent rectification stage) and obstructs normal resonance produced by the secondary coil 31 and the resonance capacitor 32.

When the electric toothbrush handle portion 12 is held in a holder (not shown) of the non-contact charger 11 and the secondary coil 31 is thereby arranged in the vicinity of the primary coil 26, electromagnetic induction occurs between the primary coil 26 and the secondary coil 31.

This transmits power toward the secondary coil 31 in a non-contact manner and charges the rechargeable battery 35 (inductive charging). In this state, when the controller 37 determines that the rechargeable battery 35 should be supplied with a small amount of charging current, as shown in Fig. 2, at timing t1, the first transistor 34 is deactivated and the second transistor 36 is activated. As a result, as shown in Fig. 2, at timing t1, charging current stops flowing to the rechargeable battery 35, the voltage between the two terminals of the secondary coil 31 is kept low, and the power received by the secondary coil 31 from the primary coil 26 is suppressed to about one half (in comparison to a structure that does not include the second transistor 36). The first transistor 34 and the second transistor 36 operate in synchronism in a complementary manner in accordance with a control signal from the controller 37. The electric toothbrush handle portion 12 is an example of an inductively chargeable electric device.

The above embodiment has the advantages described below.
(1) The resonance obstruction element (second transistor 36) obstructs normal resonance produced by the secondary coil 31 and the resonance capacitor 32 in synchronism with the control performed by the first transistor 34 to suppress the charging current. Thus, when suppressing the charging current supplied to the rechargeable battery 35, the power received by the secondary coil 31 from the primary coil 26 is synchronously suppressed. This prevents unnecessary heating of the secondary coil 31 and prevents power from being wasted.
(2) The resonance obstruction element is a switching element (the second transistor 36), which short-circuits the two terminals of the secondary coil 31. Thus, the second transistor 36 short-circuits the two terminals of the secondary coil 31 in synchronism with the control performed by the first transistor 34 to suppress the charging current. This effectively obstructs normal resonance produced by the secondary coil 31 and the resonance capacitor 32. Thus, when the charging current supplied to the rechargeable battery 35 is suppressed, the power received by the secondary coil 31 from the primary coil 26 is synchronously suppressed. This prevents unnecessary heating of the secondary coil 31 and prevents power from being wasted.
(3) The switching element (second transistor 36) is arranged toward the charging current control unit (first transistor 34) from the diode 33, which serves as the rectification unit. Further, the two terminals of the secondary coil 31 are short-circuited in a subsequent rectification stage at the switching element (second transistor 36). This keeps the voltage between the two terminals of the secondary coil 31 low (decreased by about one half). As a result, the switching element does not have to allow for a bidirectional flow of current (short-circuiting). Thus, as long as current is allowed to flow in one direction, the switching element may be the second bipolar transistor (second transistor 36) or a field effect transistor (FET), which are inexpensive. This lowers costs.

It should be apparent to those skilled in the art that the present invention may be embodied in many other specific forms without departing from the scope of the invention. Particularly, it should be understood that the present invention may be embodied in the following forms.

In the above embodiment, the resonance obstruction element is the second bipolar transistor (second transistor 36), which short-circuits the two terminals of the secondary coil (in a subsequent stage of the diode 33). However, the resonance obstruction element may have any other structure that allows for obstruction of normal resonance, which is produced by the secondary coil 31 and the resonance capacitor 32, in synchronism with the control performed by the first transistor 34 to suppress the charging current.

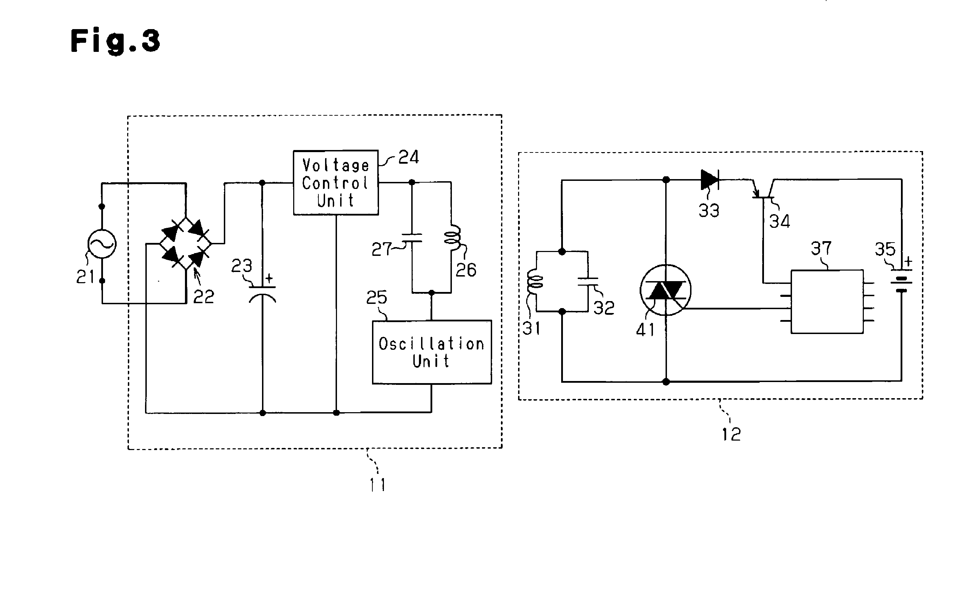

For example, in lieu of the second transistor 36 of the above embodiment, the electric toothbrush handle portion 12 shown in Fig. 3 includes a triac 41, which serves as a resonance obstruction element and a switching element The triac 41 is connected to a first node between one terminal of the secondary coil 31 and the anode of the diode 33 and a second node between the other terminal of the secondary coil 31 and the rechargeable battery 35.

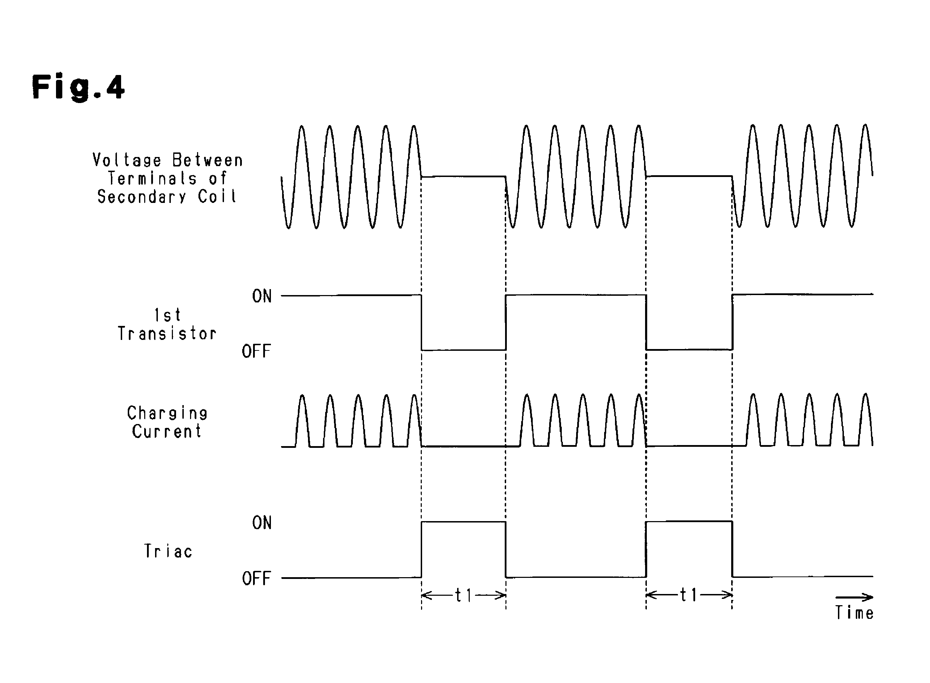

In this electric toothbrush handle portion 12, for example, when the controller 37 determines that the charging current supplied to the rechargeable battery 35 may be decreased to a small amount, as shown in Fig. 4, at timing t1, the first transistor 34 is deactivated and the triac 41 is activated. As a result, as shown in Fig. 4, at timing t1, charging current stops flowing to the rechargeable battery 35. Further, the triac 41 allows for bidirectional flow of current. This negates normal resonance produced by the secondary coil 31 and the resonance capacitor 32 and minimizes the voltage between the two terminals of the secondary coil 31 to substantially zero. Thus, in contrast with a structure that does not include the triac 41, the power received by the secondary coil 31 from the primary coil 26 is minimized. This allows for further suppression of unnecessary heating and power consumption of the secondary coil 31.

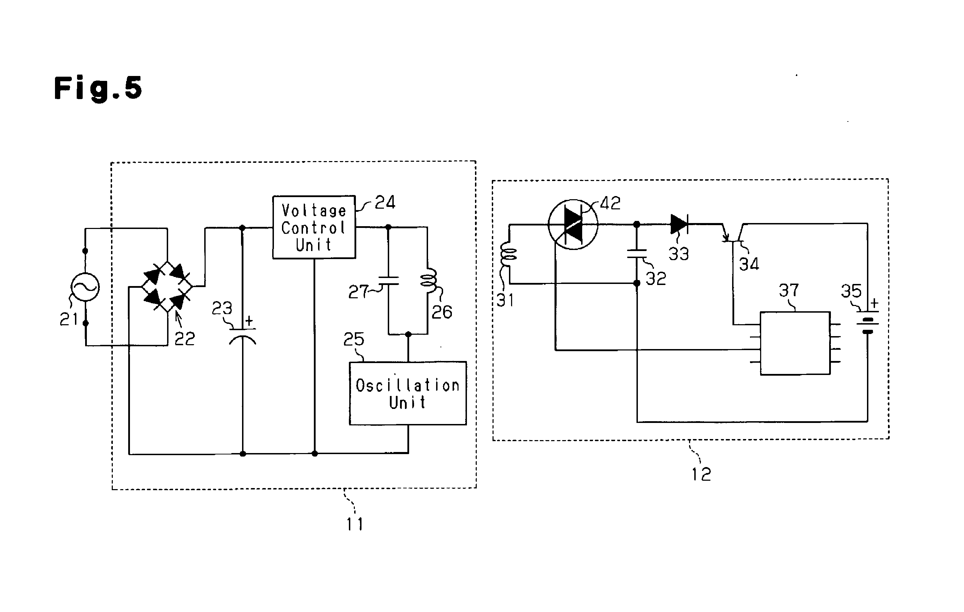

In another example, in lieu of the second transistor 36 of the above embodiment, the electric toothbrush handle portion 12 shown in Fig. 5 includes a triac 42, which serves as a resonance obstruction element and a switching element. The triac 42 is connected between the secondary coil 31 and the resonance capacitor 32 to open the connection of the secondary coil 31 and the resonance capacitor 32. In Fig. 5, the triac 42 is activated during normal charging. For example, when the controller 37 determines that the charging current supplied to the rechargeable battery 35 may be decreased to a small amount, the first transistor 34 and the triac 42 are both deactivated.

In this manner, in synchronism with the control performed by the first transistor 34 to suppress the charging current, the triac 42 opens the connection of the secondary coil 31 and the resonance capacitor 32. This completely obstructs normal resonance produced by the secondary coil 31 and the resonance capacitor 32. Thus, in contrast with a structure that does not include the triac 42, when suppressing the charging current supplied to the rechargeable battery 35, the power synchronously received by the secondary coil 31 from the primary coil 26 is minimized. This further effectively suppresses unnecessary heating and power consumption of the secondary coil 31.

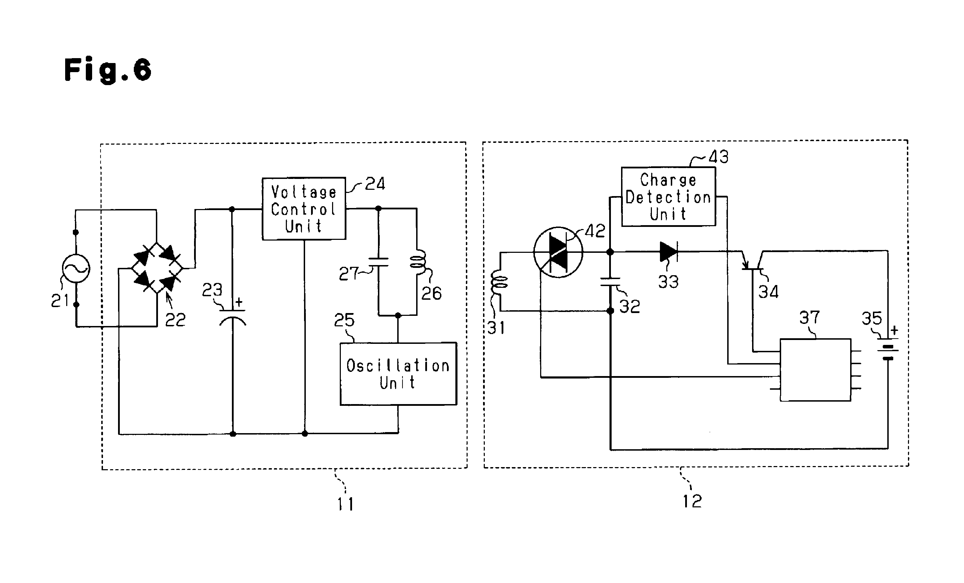

Although not particularly mentioned, the above embodiment and modifications (refer to Figs. 3 and 5), the electric toothbrush handle portion 12 may include a charge detection unit, which detects from the voltage at the secondary coil 31 whether the non-contact charger 11 is located in the vicinity of the electric toothbrush handle portion 12. Here, the "vicinity of the electric toothbrush handle portion" refers to a range allowing for electromagnetic induction coupling of the primary coil of the non-contact charger with the secondary coil of the chargeable electric device. More specifically, this phrase refers to a state in which the electric toothbrush handle portion 12 is held in the holder (not shown) of the non-contact charger 11. For example, as shown in Fig. 6, a charge detection unit 43 is connected to one terminal of the secondary coil 31 (via the triac 42 in the illustrated example) and the controller 37. The charge detection unit 43 detects from the voltage at the secondary coil 31 whether the non-contact charger 11 is located in the vicinity of the electric toothbrush handle portion 12. In this case, regardless of the control for suppressing the charging current, the controller 37 gives priority to control of the triac 42 so that the triac 42 does not obstruct resonance, that is, so that the triac 42 is not deactivated, during a predetermined timing in which the charge detection unit 43 performs detection. The predetermined timing in which the charge detection unit 43 performs detection refers to, for example, instantaneous timings of predetermined time intervals (e.g., 0.01 seconds). For example, when the voltage at the secondary coil 31 is high at four successive timings, the charge detection unit 43 determines that the electric toothbrush handle portion 12 is being held in the non-contact charger 11.

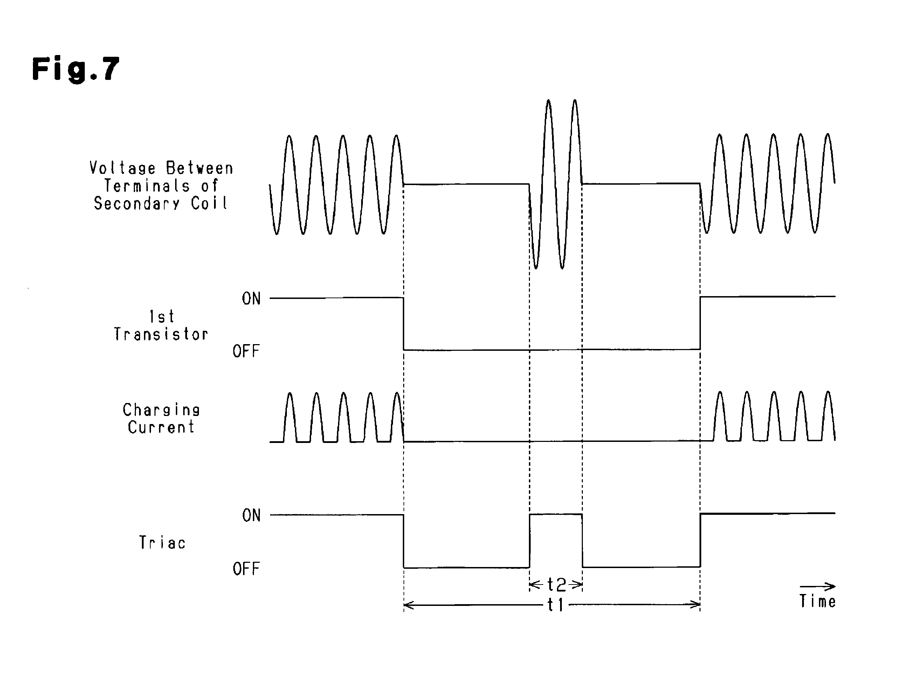

In this electric toothbrush handle portion 12, for example, when the controller 37 determines that the charging current supplied to the rechargeable battery 35 may be decreased to a small amount, as shown in Fig. 7, at timing t1, the first transistor 34 is deactivated. Further, at timing T1, the triac 42 is basically deactivated (state obstructing the resonance). However, at predetermined timing t2 during which the charge detection unit 43 performs detection, priority is given for deactivating the triac 42. Thus, at timing t2, normal resonance occurs. This generates a large voltage between the two terminals of the secondary coil 31. Thus, the charge detection unit 43 normally detects from the voltage at the secondary coil 31 whether the non-contact charger 11 is located in the vicinity of the chargeable electric device. That is, when the resonance obstruction element (triac 42) attempts to obstruct oscillation (always synchronously) based on only the control for suppressing the charging current with the charging current control unit (first transistor 34), the timing t2 for detection may be overlapped with the resonance obstruction timing. In such a case, even though the non-contact charger 11 is located near the chargeable electric device, the non-contact charger 11 may be erroneously detected as not being located in the vicinity of the chargeable electric device. This structure avoids such an erroneous detection.

In the above embodiment, the chargeable electric device is the electric toothbrush handle portion 12 of the electric toothbrush. However, the chargeable electric device that transmits power from a non-contact charger in a non-contact manner is not limited in such a manner. For example, the chargeable electric device may be an electric razor handle portion of an electric razor.

The present examples and embodiments are to be considered as illustrative and not restrictive, and the invention is not to be limited to the details given herein, but may be modified within the scope and equivalence of the appended claims.

## Claims

1. A chargeable electric device comprising:
a rechargeable battery;
a secondary coil arranged to be coupled by electromagnetic induction to a primary coil of a non-contact charger when charging the rechargeable battery;
a resonance capacitor connected to the secondary coil;
a rectification unit connected to the secondary coil;
a charging current control unit arranged between the rectification unit and the rechargeable battery to control charging current supplied from the rectification unit to the rechargeable battery; and
a resonance obstruction element which obstructs normal resonance produced by the secondary coil and the resonance capacitor in synchronism with the control performed by the charging current control unit to suppress the charging current.

2. The chargeable electric device according to claim 1, wherein the resonance obstruction element is a switching element that short-circuits the two terminals of the secondary coil.

3. The chargeable electric device according to claim 2, wherein the switching element is arranged toward the charging current control unit from the rectification unit.

4. The chargeable electric device according to claim 3, wherein the switching element allows for current to flow in only one direction.

5. The chargeable electric device according to claim 2, wherein the switching element is arranged toward the secondary coil from the rectification unit and allows for a bidirectional flow of current.

6. The chargeable electric device according to claim 1, wherein the resonance obstruction element is a switching element that opens the connection between the secondary coil and the resonance capacitor.

7. The chargeable electric device according to claim 1, further comprising:
a charge detection unit that detects whether or not the non-contact charger is located in the vicinity of the chargeable electric device from the voltage at the secondary coil;
wherein the resonance obstruction element does not obstruct resonance during a predetermined detection timing of the charge detection unit regardless of the control performed by the charging current control unit to suppress the charging current.

8. The chargeable electric device according to claim 1, further comprising:
a controller connected to the rechargeable battery to provide the charging current control unit and the resonance obstruction element with a control signal, wherein the controller monitors whether the rechargeable battery is in a state in which the supply of the charging current is unnecessary or in a state in which only a small amount of the charging current small is necessary and synchronously operates the charging current control unit and the resonance obstruction element.

9. The chargeable electric device according to claim 8, wherein the controller synchronously operates the charging current control unit and the resonance obstruction element in a complementary manner when the rechargeable battery is in a state in which the supply of the charging current is unnecessary or in a state in which only a small amount of the charging current is necessary to suppress or stop the supply of charging current to the rechargeable battery.

10. The chargeable electric device according to claim 9, wherein the resonance obstruction element includes a switching element connected to a first node between one terminal of the secondary coil and the charging current control unit and a second node between the other terminal of the secondary coil and the rechargeable battery; and
the controller deactivates the charging current control unit and activates the resonance obstruction element when the rechargeable battery is in a state in which the supply of the charging current is unnecessary or in a state in which only a small amount of the charging current is necessary.

11. The chargeable electric device according to claim 8, wherein the resonance obstruction element includes a switching element connected between the secondary coil and the resonance capacitor; and
the controller deactivates the charging current control unit and the resonance obstruction element and opens the connection of the secondary coil and the resonance capacitor when the rechargeable battery is in a state in which the supply of the charging current is unnecessary or in a state in which only a small amount of the charging current is necessary.
